(19) Europäisches Patentamt
European Patent Office
Office européen des brevets

(11) Publication number: **0 406 979 A1**

(12) # EUROPEAN PATENT APPLICATION

(21) Application number: 90201789.6

(22) Date of filing: 05.07.90

(51) Int. Cl.5: C08L 67/04, C08L 77/00

(30) Priority: 07.07.89 NL 8901737

(43) Date of publication of application:
09.01.91 Bulletin 91/02

(84) Designated Contracting States:
AT BE CH DE DK ES FR GB GR IT LI NL SE

(71) Applicant: STAMICARBON B.V.
Mijnweg 1
NL-6167 AC Geleen(NL)

(72) Inventor: Koning, Cornelis Eme
Parkstraat 18
NL-6436 EL Schinnen(NL)
Inventor: Bruls, Wilhelmus Gerardus Marie
Graaf Wolterhoenstraat 32
NL-6243 BE Meerssen(NL)
Inventor: Van Asperen, Pieter Jan
Op de Windhaspel 9
NL-6191 LC Beek(NL)

(54) **Polymer composition based on a liquid crystalline polymer and a polyamide.**

(57) The invention relates to a melt-processable polymer composition including a thermotropic liquid crystalline polymer and a polyamide containing:

a) 1-98 parts by weight of a thermotropic liquid crystalline polymer;

b) 1-98 parts by weight of a polyamide; and

c) 0.5-20 parts by weight of a phenoxy resin. The polymer composition according to the invention has improved miscibility and a good balance of mechanical properties, the modulus of elasticity being excellent both parallel with and perpendicular to the machine direction.

EP 0 406 979 A1

Xerox Copy Centre

# POLYMER COMPOSITION BASED ON A LIQUID CRYSTALLINE POLYMER AND A POLYAMIDE

## BACKGROUND OF THE INVENTION

(a) Technical Field of Invention

The present invention relates to a polymer composition comprising a thermotropic liquid crystalline polymer and a polyamide.

(b) Background of the Art

Polymer compositions containing thermotropic liquid crystalline polymers are well known in the literature. For example, German Patent Application DE-A-3216413 describes that the addition of a small amount of a partially crystalline thermoplastic polymer to a thermotropic liquid crystalline polymer will result in the reduction in the anisotropy in the mechanical properties.

However, such polymers are not miscible with one another and therefore moulding compounds obtained from these polymer compositions do not have a fine and smooth surface or optimum properties.

As stated above, the mixture of both components shows reduced anisotropy in the mechanical properties (for instance modulus and strenght). The absolute value of the mechanical properties in the machine direction are reduced due to the poor miscibility of the two components. Optimum properties are mechanical properties with reduced anisotropy combined with improved mechanical properties in the machine direction. Thus, optimum properties are well balanced mechanical properties.

The applicants have now prepared a polymer composition comprising a thermotropic liquid crystalline polymer and a polyamide, with considerably improved miscibility between the two polymers, which results in optimum mechanical properties.

## SUMMARY OF THE INVENTION

Accordingly, the present invention provides a melt-processable polymer composition comprising a thermotropic liquid crystalline polymer, a polyamide, and a phenoxy.

The invention also provides an article comprising a melt-processable polymer composition.

The invention further provides a process for the preparation of a melt-processable polymer composition.

## DETAILED DESCRIPTION AND PREFERRED EMBODIMENTS OF THE INVENTION

The polymer composition of the invention comprises:

a) 1-98 parts by weight of a thermotropic liquid crystalline polymer;

b) 1-98 parts by weight of a polyamide; and

c) 0.5-20 parts by weight of a phenoxy resin.

It has been found that the polymer composition according to the invention possesses an optimum balance of mechanical properties.

An optimum balance of mechanical properties means mechanical properties with reduced anisotropy combined with improved mechanical properties in the machine direction. Liquid crystalline polymers or polymer compositions comprising liquid crystalline polymers show anisotropic mechanical properties in the machine direction (or direction of molecular orientation) and perpendicular to the machine direction (or direction of molecular orientation). This means that these polymers exhibits for instance higher strenghts and moduli in the machine direction (or molecular orientation) than perpendicular to the machine direction (or molecular orientation).

It has also been found that the miscibility of the polymers in the composition has considerably increased.

It should be noted that WO-88/00220 describes a polymer composition that comprises a polyarylate, a phenoxy resin and a polyamide. Although the addition of phenoxy resin leads to improved mechanical properties, it does not result in improved mechanical properties perpendicular to the direction of orientation or processing of the polymers. Further, thermotropic liquid crystalline polymers do not form part of the polymer composition described in WO-88/00220.

Preferably, the polymer composition according to the invention contains:

a) 40-70 parts by weight of a thermotropic liquid crystalline polymer;

b) 30-60 parts by weight of a polyamide; and

c) 0.5-10 parts by weight of a phenoxy resin.

Thermotropic liquid crystalline polymers are known. In general, liquid crystalline polymers are composed of:

(a) aromatic units with an oxy and a carboxyl group,

(b) aromatic units with two oxy groups, and

(c) aromatic units with two carboxyl groups.

The unit with an oxy and a carboxyl group is selected depending on the desired properties of the polymer. In general, such a unit has a formula

$$-O-R-\overset{O}{C}-,$$

in which R contains at least one aromatic ring, for example:

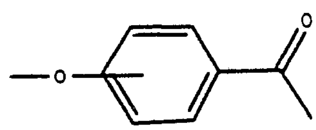

(I)

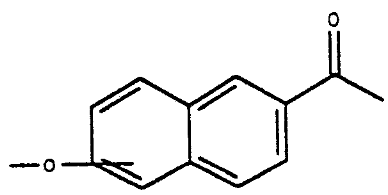

(Ia)

These units are obtained from hydroxybenzoic acid, hydroxynaphthalenecarboxylic acid or from derivatives thereof. The oxybenzoyl unit of formula (I) may be para- or meta-substituted. Mixtures of para- and meta-substituted oxybenzoyl units of formula (I) may also be used. One or more of the hydrogen atoms in the aromatic ring may be substituted by an alkyl or an alkoxy group with one to four carbon atoms, by a halogen such as chlorine, bromine or fluorine, by a phenyl group, or combinations thereof, in which one or more of the hydrogen atoms may be substituted by an alkyl or an alkoxy group with one to four carbon atoms, or by a halogen such as chlorine, bromine or fluorine.

Units with two oxy groups (-O-) have the formula O-R-0, in which R represents at least one aromatic ring, for example:

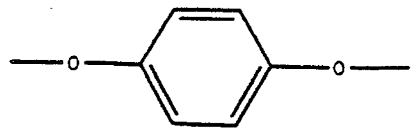

(IIa)

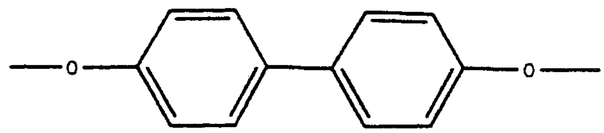

(IIb)

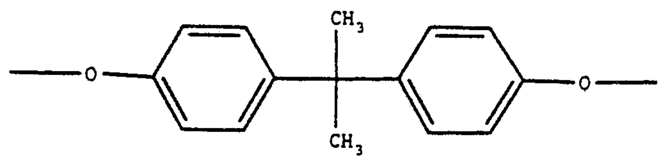

(IIc)

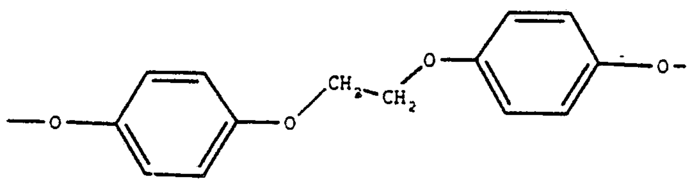

(IId)

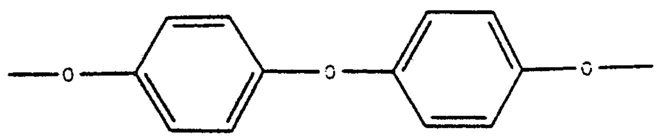

(IIe)

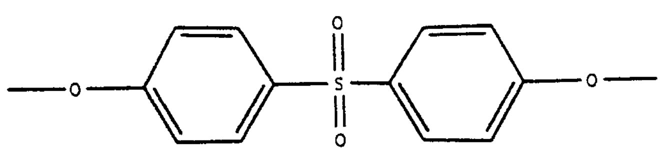

(IIf)

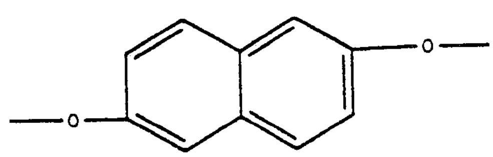

(IIg)

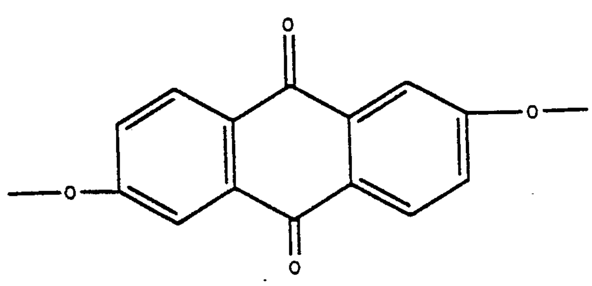

(IIi)

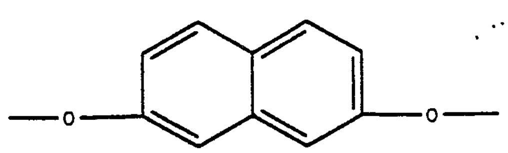

(IIh)

The liquid crystalline polymer in the polymer composition according to the invention may also contain mixtures of the aforementioned units. One or more of the hydrogen atoms in the aromatic rings may be substituted by an alkyl or alkoxy group, a halogen or a phenyl group, in which one or more of the hydrogen

atoms may be substituted by an alkyl or an alkoxy group with one to four carbon atoms, or by a halogen such as chlorine, bromine or fluorine.

The aromatic units with two carboxyl groups can be obtained from aromatic dicarboxylic acids or from the corresponding esters, such as terephthalic acid, isophthalic acid, 2,6-naphthalenedicarboxylic acid, 2,7-naphthalenedicarboxylic acid, bibenzoic acid, 4,4′-di-carboxyldiphenylsulphone, 4,4′-dicarboxyldiphenyl-ethane, 4,4′-dicarboxyldiphenylsulphide, 4,4′-di-carboxylphenylether, 4,4′-dicarboxyldiphenyl-methane, 4,4′-dicarboxyldiphenoxyethane, and 2,2-bis(4-carboxylphenyl)propane.

Preferably, the aromatic units with two carboxyl groups are obtained from terephthalic acid, isophthalic acid, the derivatives or combinations thereof. One or more hydrogen atoms in the aromatic ring may be substituted by an alkyl or alkoxy group, a halogen or a phenyl group, in which one or more of the hydrogen atoms may be substituted by an alkyl or an alkoxy group with one to four carbon atoms, or by a halogen such as chlorine, bromine or fluorine. Preferably, the units with two carboxyl groups are obtained from unsubstituted terephthalic acid, isophthalic acid or mixtures thereof.

If so desired, the liquid crystalline polymer may also contain amine-containing units, which can be obtained from, for example, known substances such as p-aminobenzoic acid, p-amino-phenol, p-N-methylaminophenol, p-phenylenediamine, N-methyl-p-phenylenediamine, N,N′-dimethyl-p-phenylenediamine, m-amino-phenol, 4-amino-1-naphthol, 4-amino-4′-hydroxydiphenyl, 4-amino-4′-hydroxyphenylether, 4-amino-4′-hydroxydiphenyl- methane, 4-amino-4′-hydroxydiphenyl-ethane, 4-amino-4′-hydroxydiphenylsulphone, 4-amino-4′-hydroxy-diphenylsulphide, 4,4′-diamino-phenylsulphide, 4,4′-diaminodiphenylsulphone, 2,5-diaminotoluene, 4,4′-ethylenediamine, 4,4′-diaminodiphenoxyethane, 4,4′-diaminodiphenyl-methane, and 4,4′-diaminodiphenylether.

In addition to the aforementioned units, the polymer may also contain sulphone, urethane, carbonate, imide, keto, sulphide, azo, anhydride, thioester groups or combinations thereof.

The polyamide in the polymer composition according to the invention is any of the conventional polyamide resins known as nylon, including the aliphatic polylactams such as poly-caprolactam and nylon 6. Polyamides are obtained by the polycondensation of aliphatic, alicyclic and aromatic diamines and dicarboxylic acids or by anionic polymerization of lactams, such as $\epsilon$-caprolactam. The polyamides include nylon 4.6, nylon 6.6, nylon 6.10, nylon 9, nylon 11, nylon 12, nylon 6/6.6, nylon 6.10 and nylon 6/11.

Preferably, the polyamide in the polymer composition according to the invention is a polyamide that contains substantially tetramethylene adipamide units, in particular to at least 75% of the number of units of the polyamide, more in particular to at least 90%. Such a polyamide has a high degree of crystallinity, of at least 40%. The preparation of such polyamides is described in, for example, European Patent Applications EP-B-0038094 and EP-B-0039524.

The phenoxy resins contained in the present compositions as component c) are known amorphous, large-molecule polymers derived from diphenols and epichlorohydrin. Such polymers are also called polyhydroxyethers. A description of phenoxy resins is given in the survey by W.F. Hale in the Encyclopedia of Polymer Science and Engineering, 1st ed., part 10, pp. 111-122. The term 'phenoxy resin' used in the present specification comprises all of the polymers according to the aforementioned survey. Phenoxy resins are produced on an industrial scale and are widely commercially available.

The most common phenoxy resin is derived from 2,2-bis-(4-hydroxyphenyl)propane, (bisphenol A) and epichlorohydrin and such a resin is preferably used as component c) in the composition.

It is surprising that only small amounts of the phenoxy resin can greatly improve the modulus of elasticity and the ultimate strength of the polymer composition according to the invention.

The compositions according to the present invention can be prepared by mixing components a), b) and c) and any additives, such as stabilizers, slip agents, lubricants, release agents, colourants, pigments, fillers, and combinations and mixtures thereof, in any conventional manner and in any desired order of mixing or simultaneously. The components may first be mixed as a powder during 1 s to 2 hours and then be kneaded at elevated temperatures of approximately 150 °C to 400 °C during 1 s to 2 hours in devices usually used for that purpose, such as Banbury mixers, extruders and the like, but they may also be fed directly into such kneaders and be mixed therein.

More in particular, the polymer composition according to the invention contains:

a) 50-70 parts by weight of a thermotropic liquid crystalline polymer,

b) 30-50 parts by weight of a polyamide, and

c) 2-10 parts by weight of a phenoxy resin.

Preferably, 0.1-5 parts by weight, relative to 100 parts by weight of polymer composition, of a transesterification catalyst is added to the components during the mixing. It has been found that such a catalyst has a favourable effect on the modulus of elasticity. Known catalysts may be used as transesterification catalyst, such as lithium acetate, sodium acetate, potassium acetate, calcium acetate,

magnesium acetate, cobalt acetate, zinc acetate, calcium benzoate, magnesium acetylacetonate, zinc acetylacetonate, zirconium butylate, zirconium propylate, titanium phenolate, sodium phenolate, germanium dioxide, antimony trioxide, dialkyl and diaryl tin oxide, dibutyl tin diacetate and butyldimethoxy tin. Preferably, use is made of magnesium, zinc acetates or combinations thereof, and antimony trioxide.

The polymer composition according to the invention can be processed, in a conventional manner, into articles which are very suitable for applications with specific requirements with respect to chemical resistance and mechanical properties, in particular the modulus of elasticity.

The usual additives and fillers may be added to the polymer composition according to the invention, such as mica, clay, glass and wollastonite.

The articles produced may be subjected to solid state post-condensation, for 1-60 hours and preferably for 4-30 hours at 200-400 °C. Such post-condensation has a positive effect on the mechanical properties. The mechanical properties such as modulus and strenght, as well in the machine direction as perpendicular to the machine direction, are improved. In anisotropy in the mechanical properties is further reduced.

The invention will be elucidated with the following examples, without being limited thereto.

## Examples

a. VECTRA B 950, supplied by Celanese, was used as thermotropic liquid crystalline polymer. This is a liquid crystalline polymer based on units derived from 2-hydroxy-6-naphthalene carboxylic acid, terephthalic acid and p-amino-phenol.

b. STANYL supplied by DSM, was used as polyamide. This is a nylon 4.6; $\eta_{rel}$ = 3.5.

c. The phenoxy resin was a resin obtained from Union Carbide (Phenoxy PKHH). This resin is derived from bisphenol-A and epichlorohydrin.

The three components were mixed in a Berstorff ZE25 (33 D) extruder and ground.

## Examples I-III and comparative example A

The compositions of the polymers are given in Table 1. The polymer compositions were processed in an Arburby allrounder injection moulding machine (220-90-300) at 315 °C. Of the film-gate moulded plates obtained (3.2 mm thick) the modulus of elasticity (ASTM D-790), the ultimate strength and the elongation at break were determined, both parallel (//) and perpendicularly (PD) to the machine direction.

TABLE 1

| | | Examples | | | |
|---|---|---|---|---|---|
| Composition | | A | I | II | III |
| component a parts by weight | | 65 | 65 | 65 | 65 |
| component b parts by weight | | 35 | 35 | 35 | 35 |
| component c parts by weight | | 0 | 2 | 5 | 10 |
| modulus of elasticity (N/mm²) | // | 4940 | 7295 | 5290 | 4975 |
| | PD | 3515 | 3435 | 3535 | 3565 |
| Elongation at break (%) | // | 1.9 | 3.4 | | |
| | PD | 1.4 | 2.1 | | |
| Ultimate strength (N/mm²) | // | 78.7 | 131.3 | 84.3 | 88.9 |
| | PD | 47.0 | 67.2 | 58.2 | 50.8 |

Examples IV through VI and Comparative Example B

The compositions of the polymers are the same as in Example I, but the transesterification catalyst was added in the compounding step in the Berstorff ZE25 extruder.
Simultaneously with the components the following transesterification catalyst was fed to the extruder:
0.1 parts by weight of Mg acetate and
0.15 parts by weight of $Sb_2O_3$,
relative to 100 parts by weight of components.
The amounts used and the results obtained with the test specimens are given in Table 2 .

TABLE 2

| | | Examples | | | |
|---|---|---|---|---|---|
| Composition | | B | IV | V | VI |
| parts by weight of component a | | 65 | 65 | 65 | 65 |
| parts by weight of component b | | 35 | 35 | 35 | 35 |
| parts by weight of component c | | - | 2 | 5 | 10 |
| Transesterification catalyst | | + | + | + | + |
| modulus of elasticity ($N/mm^2$) | // | 5015 | 6105 | 6310 | 6565 |
| | PD | - | 3535 | 3555 | 3540 |
| Ultimate strength ($N/mm^2$) | // | 89.6 | 111.9 | 107.0 | 118.6 |

It was found that the addition of a transesterification catalyst during the compounding step results in the considerable improvement of the modulus of elasticity (//) and the ultimate strength of the test specimen in Examples V and VI. Comparative example B shows that when a transesterification catalyst is used without the phenoxy resin the modulus of elasticity hardly changes.

It has thus been found that the optimum mechanical properties were obtained with the combination of 5-10 parts by weight of phenoxy resin and a transesterification catalyst.

The polymer compositions according to examples I-VI were very well miscible. The test specimens produced had a fine and smooth surface.

## Claims

1. A melt-processable polymer composition comprising:
   a) 1-98 parts by weight of a thermotropic liquid crystalline polymer;
   b) 1-98 parts by weight of a polyamide; and
   c) 0.5-20 parts by weight of a phenoxy resin.
2. Polymer composition according to claim 1, comprising:
   a) 40-70 parts by weight of a thermotropic liquid crystalline polymer;
   b) 30-60 parts by weight of a polyamide; and
   c) 0.5-10 parts by weight of a phenoxy resin.
3. Polymer composition according to claim 1, wherein b) is a polyamide that contains substantially tetramethylene adipamide units.
4. Polymer composition according to claim 1, wherein c) is a resin derived from epichlorohydrin and bisphenol-A.
5. Process for the preparation of a melt-processable polymer composition which comprises mixing a thermotropic liquid crystalline polymer, a polyamide, and a phenoxy resin in the presence of a transesterificaticn catalyst.
6. A shaped article formed from the polymer composition of claim 1.
7. Process for the preparation of a melt-processable polymer composition which comprises a) 1-98 parts by weight of a thermotropic liquid crystalline polymer, b) 1-98 parts by weight of a polyamide, c) 0.5-20 parts by weight of a phenoxy resin and 0.1-5 parts by weight of a transesterification catalyst.

European Patent Office

# EUROPEAN SEARCH REPORT

Application Number

EP 90 20 1789

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | WO-A-8 800 220 (AMOCO)<br>--- | | C 08 L 67/04<br>C 08 L 77/00 |
| A | EP-A-0 093 333 (BAYER)<br>& DE-A-3 216 413 (BAYER) (Cat. D)<br>--- | | |
| A | EP-A-0 030 417 (I.C.I.)<br>----- | | |
| | | | TECHNICAL FIELDS SEARCHED (Int. Cl.5) |
| | | | C 08 L |

The present search report has been drawn up for all claims

| Place of search | Date of completion of the search | Examiner |
|---|---|---|
| THE HAGUE | 08-10-1990 | LEROY ALAIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document